# FASCICULE DE BREVET EUROPEEN

(11) **EP 3 158 210 B1**
(45) Date de publication et mention de la délivrance du brevet: **25.11.2020**
(21) Numéro de dépôt: 15732875.8
(22) Date de dépôt: 15.06.2015
(51) Int. Cl.: F16C 33/66, F01D 25/18

(54) **DISPOSITIF ET PROCÉDÉ DE LUBRIFICATION D'UN PALIER A ROULEMENT DE TURBOMACHINE**
VORRICHTUNG UND VERFAHREN ZUM SCHMIEREN DES WÄLZLAGERS EINER TURBOMASCHINE
DEVICE AND METHOD FOR LUBRICATING A TURBOMACHINE ROLLING BEARING

(30) Priorité: 23.06.2014 FR 1455803
(43) Date de publication de la demande: 26.04.2017
(73) Titulaire: Safran Aircraft Engines, 75015 Paris (FR)
(72) Inventeur: PIKOVSKY, Catherine, F-77550 Moissy-Cramayel cedex (FR); BOUDEBIZA, Tewfik, F-77550 Moissy-Cramayel cedex (FR)
(74) Mandataire: Gevers & Orès
(86) Numéro de dépôt international: PCT/FR2015/051583
(87) Numéro de publication internationale: WO 2015/197943

(56) Documents cités:
- EP-A2- 1 507 328
- FR-A1- 2 688 574
- US-A- 3 243 243
- US-A- 3 497 277
- US-A- 4 384 749
- US-A1- 2005 133 466
- US-A1- 2011 026 865

## Description

### DOMAINE TECHNIQUE

La présente invention concerne notamment un dispositif et un procédé de lubrification d'un palier à roulement de turbomachine.

### ETAT DE L'ART

De manière classique, un palier à roulement de turbomachine est monté entre une pièce interne et une pièce externe, le palier comportant des éléments roulants montés entre une bague externe solidaire de la pièce externe, et une bague interne solidaire de la pièce interne.

Un palier de turbomachine est en général lubrifié au moyen d'un gicleur qui pulvérise de l'huile sur le palier ou au voisinage du palier.

Dans la technique actuelle, dans le cas où le palier est monté entre deux pièces de rotor (la bague externe est solidaire de la pièce de rotor externe et la bague interne est solidaire de la pièce de rotor interne), ou une pièce de rotor et une pièce de stator (la bague externe est solidaire de la pièce de stator externe et la bague interne est solidaire de la pièce de rotor interne), le palier est lubrifié en fonctionnement par de l'huile qui est acheminée par la bague interne jusqu'au palier grâce aux forces centrifuges. Dans ce cas, la pièce de rotor interne comprend des conduits de passage d'huile d'alimentation en huile de la bague interne du palier, qui débouchent à leurs extrémités radialement internes dans une baignoire de rétention d'huile apportée par un gicleur. Du fait des forces centrifuges, l'huile s'écoule depuis la baignoire jusqu'au palier, en passant à travers les conduits de la pièce interne.

Cependant, cette technologie n'est pas adaptée dans le cas où la pièce interne de support de la bague interne du palier est une pièce de stator, c'est-à-dire une pièce immobile en fonctionnement. La pièce de stator n'étant pas soumise aux forces centrifuges, il n'existe actuellement pas de solution pour lubrifier efficacement le palier en évitant un apport direct d'huile sur le palier par l'intermédiaire d'un gicleur.

L'état de l'art comprend également les documents FR-A1-2 688 574, US-A1-2005/133466, US-A-4 384 749, EP-A2-1 507 328 et US-A-3 243 243 et US 2011/026865.

La présente invention propose une solution simple, efficace et économique à ce problème.

### EXPOSE DE L'INVENTION

L'invention propose un dispositif de lubrification d'un palier à roulement de turbomachine, comprenant un palier à roulement monté entre une pièce interne et une pièce externe, le palier comportant des éléments roulants montés entre une bague externe solidaire de la pièce externe et une bague interne solidaire de la pièce interne, la pièce interne comportant au moins un premier conduit de passage d'huile pour l'alimentation en huile de la bague interne du palier, caractérisé en ce que la pièce interne est une pièce de stator et en ce que ledit au moins un premier conduit est raccordé à une source d'alimentation en huile configurée pour délivrer l'huile à une pression suffisante pour que cette huile soit acheminée jusqu'aux éléments roulants du palier.

La présente invention propose ainsi une solution au problème précité dans laquelle la technologie de la technique antérieure est adaptée pour permettre de lubrifier un palier monté entre une pièce interne de stator et une pièce externe de rotor. Cette adaptation consiste à raccorder les conduits de la pièce de stator à une source d'alimentation en huile configurée pour délivrer l'huile à une pression suffisante pour que cette huile soit acheminée jusqu'au palier. Au contraire de la technique antérieure où l'huile est acheminée jusqu'au palier grâce aux forces centrifuges, l'huile est ici acheminée jusqu'au palier grâce à la pression à laquelle la source délivre l'huile, qui n'est soumise à aucune force centrifuge.

Préférentiellement, la bague interne comprend des canaux sensiblement radiaux de passage d'huile dont les extrémités radialement internes débouchent dans une cavité annulaire, telle qu'une cavité annulaire interne de la bague interne.

Selon un mode particulier de réalisation de l'invention, une pièce intermédiaire, telle qu'un fourreau, est intercalée entre la pièce interne et la bague interne, ladite pièce intermédiaire comportant au moins un second conduit de passage d'huile qui est raccordé audit au moins un premier conduit.

L'extrémité radialement interne dudit au moins un second conduit peut déboucher dans une cavité annulaire dans laquelle débouche l'extrémité radialement externe dudit au moins un premier conduit. La cavité est par exemple une cavité annulaire externe de la pièce intermédiaire.

Ledit au moins un premier conduit peut avoir un diamètre différent de celui dudit au moins un second conduit.

Avantageusement, ledit au moins un premier conduit est en communication fluidique avec un logement de réception d'une extrémité d'un tuyau d'alimentation en huile depuis ladite source. Au moins un joint d'étanchéité peut être monté entre l'extrémité du tuyau et le logement.

De préférence, le dit au moins un premier conduit définit une section de passage d'huile inférieure ou égale à celle du tuyau. En variante ou en caractéristiques additionnelles, ledit au moins un second conduit définit une section de passage d'huile inférieure ou égale à celle du tuyau. Les sections de passage des premiers et/ou second conduits sont ainsi avantageusement configurées pour que ces conduits aient une fonction calibrante.

La présente invention concerne également une turbomachine, telle qu'un turbopropulseur à au moins une hélice non carénée, caractérisée en ce qu'elle comprend au moins un dispositif tel que décrit ci-dessus.

La présente invention concerne encore un procédé de lubrification d'un palier à roulement de turbomachine, ce palier étant monté entre une pièce interne et une pièce externe, le palier comportant une bague externe solidaire de la pièce externe et une bague interne solidaire de la pièce interne, la pièce interne comportant au moins un premier conduit de passage d'huile pour l'alimentation en huile de la bague interne du palier, caractérisé en ce que, la pièce interne étant immobile, il consiste à alimenter en huile ledit au moins un premier conduit à une pression suffisante pour que cette huile soit acheminée jusqu'au palier.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une demi-vue très schématique en coupe axiale d'un turbopropulseur à double hélices non carénées,
- la figure 2 est une demi-vue schématique en coupe axiale d'un dispositif de lubrification selon l'invention,
- les figures 3 et 4 sont des vues très schématiques d'organes du dispositif de la figure 2 et illustrent des variantes de réalisation de l'invention en coupe perpendiculaire à l'axe moteur, en ramenant tous les passages d'huile dans un même plan pour une meilleure compréhension,

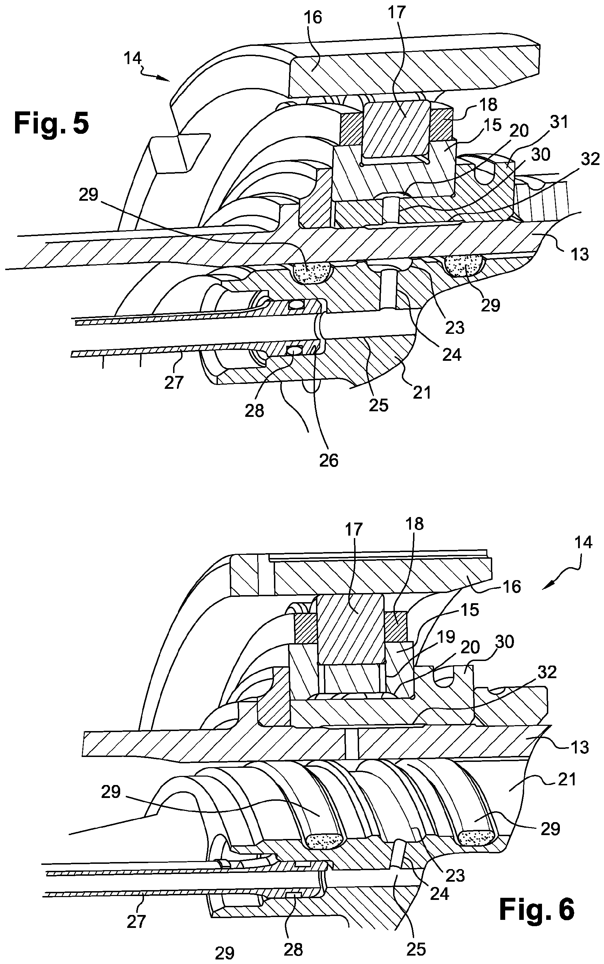

- les figures 5 et 6 sont des vues schématiques partielles en coupe axiale et en perspective du dispositif de la figure 2,
- la figure 7 est une vue correspondant à la figure 2 et représentant une variante de réalisation de l'invention, et
- les figures 8 à 10 sont des vues correspondants aux figures 3 et 4 et illustrent d'autres variantes de réalisation de l'invention.

### DESCRIPTION DETAILLEE

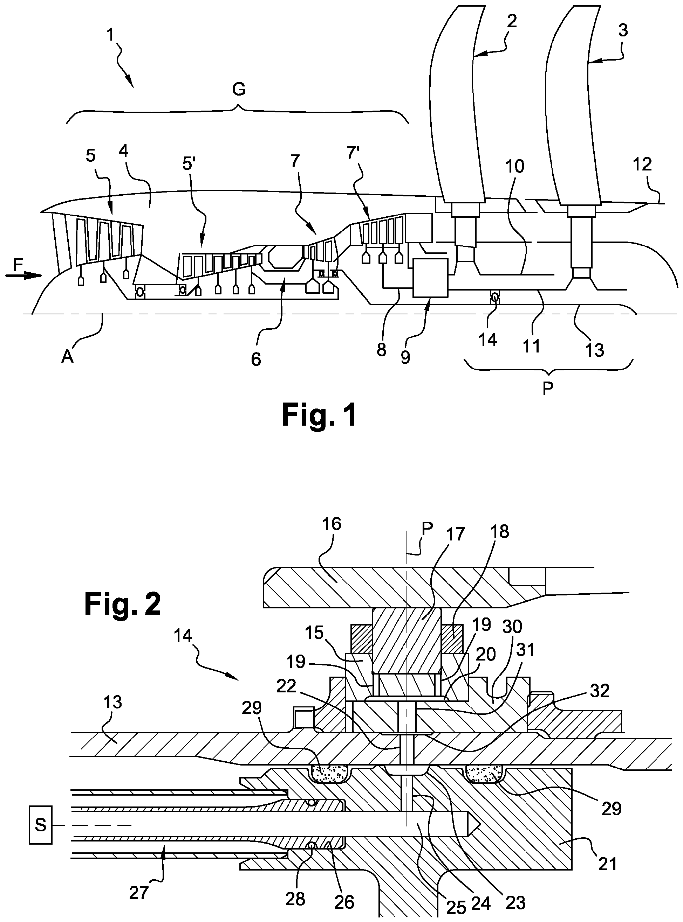

On se réfère d'abord à la figure 1 qui représente un turbopropulseur 1 pour un aéronef, ce turbopropulseur étant équipé d'un doublet d'hélices de propulsion contrarotatives, et désigné par l'expression anglaise « open rotor » ou « unducted fan ».

Le turbopropulseur 1 comprend une hélice amont 2 et une hélice aval 3 montées rotatives, dans des sens contraires, autour de l'axe longitudinal A. Le turbopropulseur 1 comprend une partie « générateur de gaz » G située à l'intérieur d'une nacelle cylindrique fixe 4 portée par la structure de l'aéronef (comme la partie arrière du fuselage d'un avion), et une partie « propulsion » P avec le doublet d'hélices 2, 3 disposées dans des plans parallèles radiaux, perpendiculaires à l'axe A, et constituant une soufflante non carénée (open rotor). Cette partie P prolonge, dans cet exemple de turbopropulseur, la partie générateur de gaz G et la nacelle 4.

La partie générateur de gaz G du turbopropulseur 1 comporte usuellement, d'amont en aval selon le sens d'écoulement, par rapport à l'axe A, du flux gazeux F entrant dans la nacelle 4, un, ou plusieurs compresseurs 5, 5' selon l'architecture du générateur de gaz à simple, plusieurs corps, une chambre annulaire de combustion 6, une ou plusieurs turbines 7, 7' à pression distincte selon ladite architecture, dont l'arbre 8 de l'une d'elles entraîne, par l'intermédiaire d'un dispositif de réduction de vitesses ou réducteur à trains épicycloïdaux 9 (désigné par l'acronyme anglais PGB pour Power Gear Box) et de façon contrarotative, les arbres concentriques et coaxiaux 10 et 11 des deux hélices amont 2 et aval 3 alignées, selon l'axe A du turbopropulseur. Une tuyère 12 termine de façon usuelle le turbopropulseur 1.

En fonctionnement, le flux d'air F entrant dans le turbopropulseur 1 est comprimé, puis mélangé à du carburant et brûlé dans la chambre de combustion 6. Les gaz de combustion engendrés passent ensuite dans les turbines 7, 7' pour entraîner en rotation inverse, via le réducteur épicycloïdal 9, les hélices 2, 3 qui fournissent la majeure partie de la poussée. Les gaz de combustion sont expulsés à travers la tuyère 12 augmentant ainsi la poussée du turbopropulseur 1.

Comme on le voit en figure 1, l'arbre 11 radialement interne entoure un fourreau cylindrique 13 de stator et est centré et guidé en rotation autour de lui par l'intermédiaire d'au moins un palier à roulement 14 qui doit être lubrifié pour assurer son bon fonctionnement.

Comme décrit dans ce qui précède, la technique antérieure ne peut pas être utilisée pour lubrifier ce palier 14 car le fourreau 13 est immobile en fonctionnement et l'huile au contact de ce fourreau 13 n'est soumise à aucune force centrifuge.

La figure 2 représente un exemple de réalisation d'un dispositif de lubrification d'un palier à roulement selon l'invention. Dans cette figure, les références 13 et 14 désignent respectivement le fourreau et le palier, comme c'est le cas en figure 1.

Le palier 14 comprend classiquement deux bagues, respectivement interne 15 et externe 16, entre lesquelles sont montées des éléments roulants 17, tels que des billes ou des rouleaux, qui sont ici maintenus à distance les uns des autres par une cage annulaire 18.

La bague interne 15 comprend deux rangées annulaires, respectivement amont et aval, de canaux 19 de passage d'huile. Ces canaux 19 sont sensiblement radiaux, leurs extrémités radialement externes débouchant sur la piste de roulement de la bague 15 et leurs extrémités radialement internes débouchant dans une cavité annulaire interne 20 de la bague 15.

Dans l'exemple représenté, la bague interne 15 du palier 14 est montée sur un support de bague 30 qui est lui-même monté sur le fourreau 13 à l'intérieur duquel est monté une pièce interne 21. La bague interne 15, le support de bague 30, la pièce 21, et le fourreau 13 sont coaxiaux et solidaires les uns des autres. Ils sont ainsi tous immobiles en fonctionnement au contraire de la bague externe 16 du palier 14 qui est solidaire en rotation de l'arbre de rotor 11 de la figure 1.

Le support de bague 30 comprend une rangée annulaire de conduits 31 de passage d'huile. Ces conduits 31 sont sensiblement radiaux. Leurs extrémités radialement externes débouchent dans la cavité 20 de la bague 15 et leurs extrémités radialement internes débouchent dans une cavité annulaire externe 32 du fourreau 13.

Le fourreau 13 comprend une rangée annulaire de conduits 22 de passage d'huile. Ces conduits 22 sont sensiblement radiaux. Leurs extrémités radialement externes débouchent dans la cavité 32 et leurs extrémités radialement internes débouchent dans une cavité annulaire externe 23 de la pièce interne 21.

La pièce 21 comprend au moins un conduit 24 de passage d'huile. Ce conduit 24 est sensiblement radial. Son extrémité radialement externe débouche dans la cavité 23 et son extrémité radialement interne débouche dans un logement interne 25 de la pièce 21.

Les conduits 31, 22 et 24 s'étendent ici dans un même plan transversal P qui passe sensiblement entre les canaux 19, à mi-distance de ceux-ci.

Le logement 25 de la pièce 21 comprend une partie amont 26 élargie dans laquelle est emboîtée une extrémité d'un tuyau 27 dont l'autre extrémité est raccordée, directement ou indirectement, à une source S d'huile. L'extrémité du tuyau 27 porte ici un joint torique 28 d'étanchéité qui coopère avec une paroi interne du logement 25 pour assurer un raccord étanche entre le tuyau 27 et la pièce 21. Le tuyau 27 a ici une orientation sensiblement axiale. Il s'étend ainsi sensiblement parallèlement à l'axe A précité.

Deux joints annulaires 29 d'étanchéité sont montés entre le fourreau 13 et la pièce 21, respectivement en amont et en aval de la cavité 23, pour assurer un raccord fluidique étanche entre les conduits 22, 24.

La source S comprend pour l'essentiel une pompe et un réservoir d'huile (non représentés). La source S est destinée à alimenter le dispositif avec de l'huile à une pression suffisante pour que, du seul fait de cette pression, l'huile soit acheminée depuis le réservoir jusqu'au palier 14 (et en particulier jusqu'aux éléments roulants 17), en passant successivement par le logement 25, le conduit 24, la cavité 23, les conduits 22, la cavité 20, et les canaux 19 (cf. flèches).

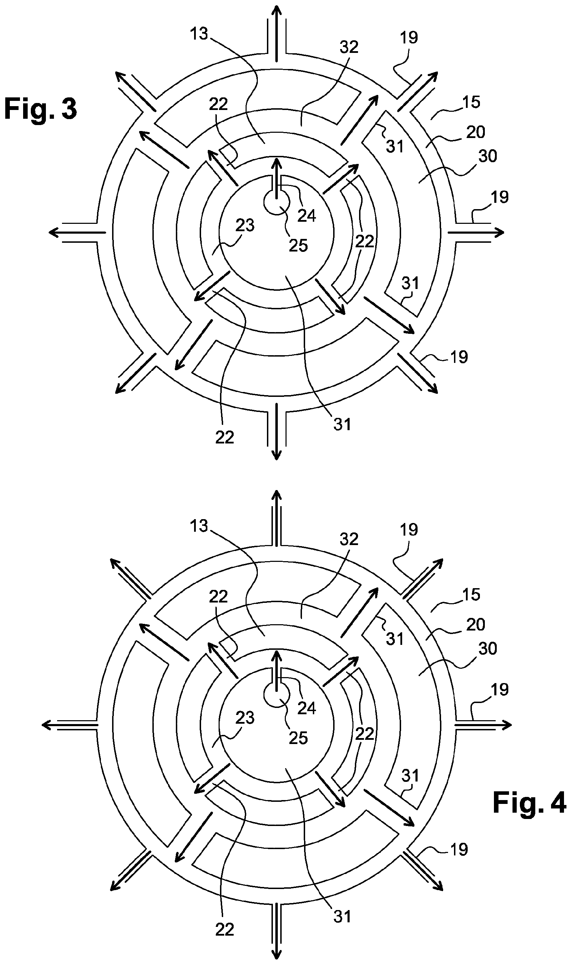

Dans l'exemple représenté et comme cela est également schématiquement représenté en figure 3, la section de passage définie par le conduit 24 est inférieure à celle des conduits 22 (c'est-à-dire aux sections de passage cumulées de ces conduits 22), ainsi qu'à celle des conduits 31, 19, du tuyau 27 et du logement 25. La section de passage du conduit 24 est une section de passage calibrante qui est destinée à calibrer la pression de l'huile alimentant le palier 14. Comme la section de passage des conduits 22 et des conduits 31, 19 sont supérieures à celle du conduit 24, la pression de l'huile ne sera quasiment pas modifiée en circulant dans les conduits 22 et sera donc sensiblement la même dans les cavités 20 et 23. Les cavités 23 et 20 sont en outre configurées pour modifier le moins possible cette pression.

La figure 4 illustre une variante de réalisation dans laquelle ce sont les conduits 19 qui assurent la fonction de calibration de la pression d'huile. La section de passage définie par les conduits 19 (sections de passage cumulées de ces conduits 19) est inférieure à celle du conduit 24, ainsi que celle des conduits 31, 22 (sections de passage cumulées de ces conduits 31, 22), du tuyau 27 et du logement 25. La section de passage des conduits 19 est une section de passage calibrante qui est destinée à calibrer la pression de l'huile alimentant le palier 14. La pression de l'huile sera donc modifiée en circulant dans les conduits 19 et sera plus élevée dans la cavité 20 que dans la cavité 23.

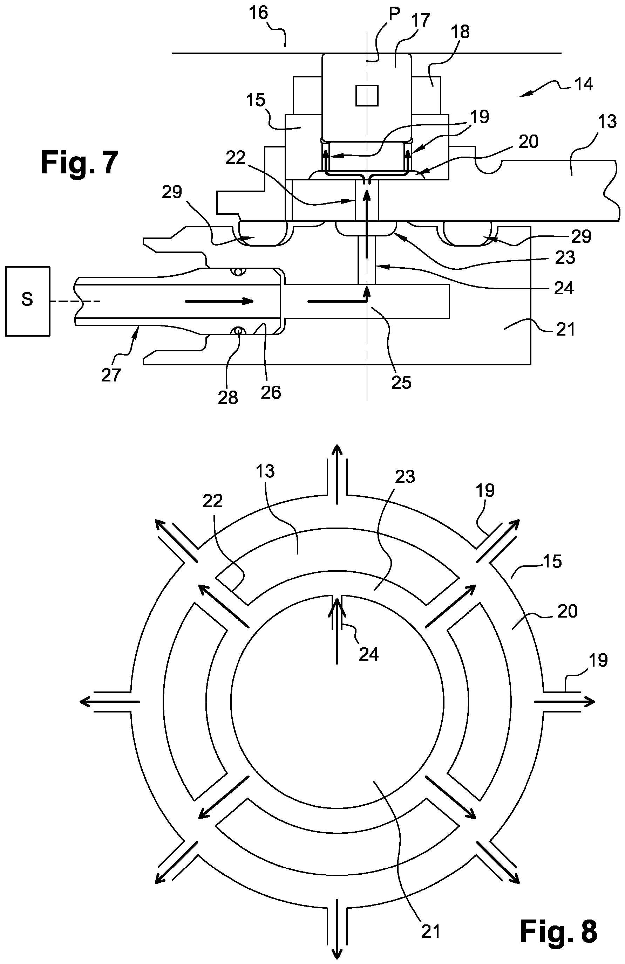

D'autres configurations pourraient exister en rajoutant ou supprimant des pièces entre la pièce interne 21 et la bague interne 15. En effet, il serait possible de supprimer les conduits 31 et la cavité 32 si le support de bague 30 n'existait pas, comme cela est schématiquement représenté aux figures 7 à 9. De même, il serait possible de rajouter des pièces semblables au support de bague 30 comportant des conduits similaires aux conduits 31 et une cavité similaire à la cavité 32, c'est-à-dire avec la section des différents éléments non calibrante pour le système.

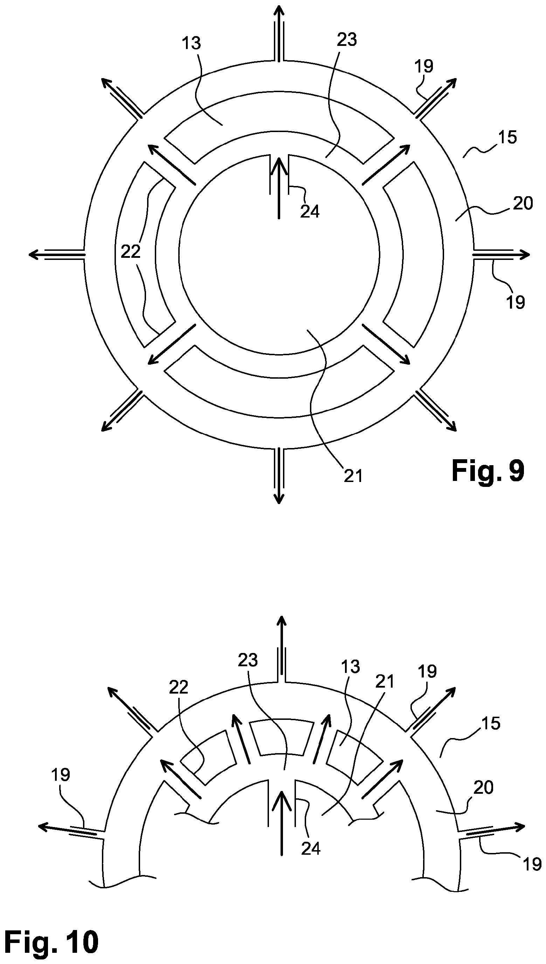

La figure 10 illustre une amélioration des réalisations présentées dans les figures 8 et 9. Les pièces 13, 21 et 15 peuvent avoir un détrompeur angulaire afin d'avoir les conduits 24, 22 et 19 placés dans la partie haute du moteur. Avantageusement, le conduit 24 sera placé à 12h (ou 12 heures, par analogie avec le cadran d'une horloge). Les conduits 22 doivent couvrir un périmètre angulaire supérieur à celui du conduit 24 et centré sur 12h. Les conduits 19 doivent couvrir un périmètre angulaire supérieur à celui des conduits 22, centré sur 12h et inférieur ou égal [-90° ;+90°] de préférence.

## Revendications

1. Dispositif de lubrification d'un palier à roulement (14) de turbomachine, comprenant un palier à roulement monté entre une pièce interne (21) de stator et une pièce externe (11), le palier comportant des éléments roulants (17) montés entre une bague externe (16) solidaire de la pièce externe et une bague interne (15) solidaire de la pièce interne, la pièce interne comportant au moins un premier conduit (24) de passage d'huile pour l'alimentation en huile de la bague interne du palier, ledit au moins un premier conduit (24) étant raccordé à une source (S) d'alimentation en huile configurée pour délivrer l'huile à une pression suffisante pour que cette huile soit acheminée jusqu'aux éléments roulants (17) du palier, **caractérisé en ce que** la bague interne (15) comprend une rangée annulaire amont de canaux (19) de passage d'huile et une rangée annulaire aval de canaux (19) de passage d'huile, les canaux (19) étant sensiblement radiaux, les extrémités radialement externes des canaux (19) débouchant sur une piste de roulement de la bague interne (15), les extrémités radialement internes des canaux (19) débouchant dans une cavité annulaire interne (20) de la bague interne (15), ledit au moins un premier conduit (24) s'étendant dans un plan transversal (P) qui passe sensiblement entre les canaux (19), à mi-distance de ceux-ci.

2. Dispositif selon la revendication 1, dans lequel une pièce intermédiaire (13) est intercalée entre la pièce interne (21) et la bague interne (15), ladite pièce intermédiaire comportant au moins un second conduit (22) de passage d'huile qui est raccordé audit au moins un premier conduit (24).

3. Dispositif selon la revendication 2, dans lequel l'extrémité radialement interne dudit au moins un second conduit (22) débouche dans une cavité annulaire (23) dans laquelle débouche l'extrémité radialement externe dudit au moins un premier conduit (24).

4. Dispositif selon la revendication 2 ou 3, dans lequel ledit au moins un premier conduit (24) a un diamètre différent de celui dudit au moins un second conduit (22).

5. Dispositif selon l'une des revendications 2 à 4, dans lequel ledit au moins un premier conduit (24) est en communication fluidique avec un logement (25) de réception d'une extrémité d'un tuyau (27) d'alimentation en huile depuis ladite source (S).

6. Dispositif selon la revendication 5, dans lequel ledit au moins un premier conduit (24) définit une section de passage d'huile inférieure ou égale à celle du tuyau (27), et/ou ledit au moins un second conduit (22) définit une section de passage d'huile inférieure ou égale à celle du tuyau.

7. Turbomachine, telle qu'un turbopropulseur (1) à au moins une hélice (2, 3) non carénée, **caractérisée en ce qu'**elle comprend au moins un dispositif selon l'une des revendications précédentes.

8. Procédé de lubrification d'un palier à roulement (14) de turbomachine, ce palier étant monté entre une pièce interne (13) immobile et une pièce externe (11), le palier comportant une bague externe (16) solidaire de la pièce externe et une bague interne (15) solidaire de la pièce interne, la pièce interne comportant au moins un premier conduit (24) de passage d'huile pour l'alimentation en huile de la bague interne du palier, la bague interne (15) comprenant une rangée annulaire amont de canaux (19) de passage d'huile et une rangée annulaire aval de canaux (19) de passage d'huile, les canaux (19) étant sensiblement radiaux, les extrémités radialement externes des canaux (19) débouchant sur une piste de roulement de la bague interne (15), les extrémités radialement internes des canaux (19) débouchant dans une cavité annulaire interne (20) de la bague interne (15), ledit au moins un premier conduit (24) s'étendant dans un plan transversal (P) qui passe sensiblement entre les canaux (19), à mi-distance de ceux-ci, **caractérisé en ce qu'**il consiste à alimenter en huile ledit au moins un premier conduit à une pression suffisante pour que cette huile soit acheminée jusqu'au palier.

## Patentansprüche

1. Schmiervorrichtung eines Turbomaschinen-Wälzlagers (14), das ein Wälzlager umfasst, das zwischen einem Statorinnenteil (21) und einem Außenteil (11) montiert ist, wobei das Lager Rollelemente (17) umfasst, die zwischen einem Außenring (16), der fest mit dem Außenteil verbunden ist, und einem Innenring (15), der fest mit dem Innenteil verbunden ist, montiert sind, wobei das Innenteil mindestens eine erste Öldurchgangsleitung (24) zur Ölversorgung des Innenrings des Lagers umfasst, wobei die mindestens eine Leitung (24) mit einer Ölversorgungsquelle (S) verbunden ist, die konfiguriert ist, um Öl mit einem ausreichenden Druck zu liefern, damit dieses Öl bis zu den Rollelementen (17) des Lagers gefördert wird, **dadurch gekennzeichnet, dass** der Innenring (15) eine ringförmige Reihe stromaufwärts von Öldurchgangskanälen (19) und eine ringförmige Reihe stromabwärts von Öldurchgangskanälen (19) umfasst, wobei die Kanäle (19) im Wesentlichen radial sind, wobei die radial äußeren Enden der Kanäle (19) auf eine Laufbahn des Innenrings (15) münden, wobei die radial inneren Enden der Kanäle (19) in einen ringförmigen Innenhohlraum (20) des Innenrings (15) münden, wobei sich die mindestens eine erste Leitung (24) in einer Querebene (P) erstreckt, die im Wesentlichen zwischen den Kanälen (19) auf halber Distanz von diesen durchgeht.

2. Vorrichtung nach Anspruch 1, wobei ein Zwischenteil (13) zwischen das Innenteil (21) und den Innenring (15) eingefügt ist, wobei das Zwischenteil mindestens eine zweite Öldurchgangsleitung (22) umfasst, die mit der mindestens einen ersten Leitung (24) verbunden ist.

3. Vorrichtung nach Anspruch 2, wobei das radial innere Ende der mindestens einen zweiten Leitung (22) in einen Ringhohlraum (23) mündet, in den das radial äußere Ende der mindestens einen ersten Leitung (24) mündet.

4. Vorrichtung nach Anspruch 2 oder 3, wobei die mindestens eine erste Leitung (24) einen Durchmesser aufweist, der von dem der mindestens einen zweiten Leitung (22) unterschiedlich ist.

5. Vorrichtung nach einem der Ansprüche 2 bis 4, wobei die mindestens eine erste Leitung (24) in Fluidverbindung mit einer Unterbringungsaufnahme (25) eines Endes eines Ölversorgungsrohrs (27) ausgehend von der Quelle (S) steht.

6. Vorrichtung nach Anspruch 5, wobei die mindestens eine erste Leitung (24) einen Öldurchgangsschnitt kleiner oder gleich dem des Rohrs (27) definiert, und/oder die mindestens eine zweite Leitung (22) einen Öldurchgangsschnitt kleiner oder gleich dem des Rohrs definiert.

7. Turbomaschine, wie ein Turbinenpropeller-Luftstrahltriebwerk (1) mit mindestens einer nicht ummantelten Luftschraube (2, 3), **dadurch gekennzeichnet, dass** sie mindestens eine Vorrichtung nach einem der vorstehenden Ansprüche umfasst.

8. Schmierverfahren eines Turbomaschinen-Wälzlagers (14), wobei dieses Lager zwischen einem unbeweglichen Innenteil (13) und einem Außenteil (11) montiert ist, wobei das Lager einen Außenring (16), der fest mit dem Außenteil verbunden ist, und einen Innenring (15), der fest mit dem Innenteil verbunden ist, umfasst, wobei das Innenteil mindestens eine erste Öldurchgangsleitung (24) für die Ölversorgung des Innenrings des Lagers umfasst, wobei der Innenring (15) eine ringförmige Reihe stromaufwärts von Öldurchgangskanälen (19) und eine ringförmige Reihe stromabwärts von Öldurchgangskanälen (19) umfasst, wobei die Kanäle (19) im Wesentlichen radial sind, wobei die radial äußeren Enden der Kanäle (19) auf eine Laufbahn des Innenrings (15) münden, wobei die radial inneren Enden der Kanäle (19) in einen ringförmigen Innenhohlraum (20) des Innenrings (15) münden, wobei sich die mindestens eine Leitung (24) in einer Querebene (P) erstreckt, die im Wesentlichen zwischen den Kanälen (19) auf halber Distanz von diesen durchgeht, **dadurch gekennzeichnet, dass** es darin besteht, die mindestens eine erste Leitung mit Öl mit einem ausreichenden Druck zu versorgen, damit dieses Öl bis zu dem Lager gefördert wird.

## Claims

1. Device for lubricating a rolling bearing (14) of a turbine engine, comprising a rolling bearing mounted between an internal stator part (21) and an external part (11), the bearing comprising rolling elements (17) mounted between an external race (16) secured to the external part and an internal race (15) secured to the internal part, the internal part comprising at least one first oil flow duct (24) for supplying oil to the internal race of the bearing, said at least one first duct (24) being connected to an oil supply source (S) configured to deliver the oil at a sufficient pressure for said oil to be transported as far as the rolling elements (17) of the bearing, **characterized in that** the internal race (15) comprises an upstream annular row of oil flow channels (19) and a downstream annular row of oil flow channels (19), the channels (19) being substantially radial, the radially external ends of the channels (19) opening into a rolling track of the internal race (15), the radially internal ends of the channels (19) opening into an internal annular cavity (20) of the internal race (15), said at least one first duct (24) extending in a transverse plane (P) which passes substantially between the channels (19), at mid-distance therefrom.

2. Device according to claim 1, wherein an intermediate part (13) is interposed between the internal part (21) and the internal race (15), said intermediate part comprising at least one second oil flow duct (22) which is connected to said at least one first duct (24).

3. Device according to claim 2, wherein the radially internal end of said at least one second duct (22) opens into an annular cavity (23) into which the radially external end of said at least one first duct (24) opens.

4. Device according to claim 2 or 3, wherein said at least one first duct (24) has a diameter that is different from that of said at least one second duct (22).

5. Device according to any one of claims 2 to 4, wherein said at least one first duct (24) is in fluid communication with a recess (25) for receiving an end of a pipe (27) for supplying oil from said source (S).

6. Device according to claim 5, wherein said at least one first duct (24) defines an oil flow cross section smaller than or equal to that of the pipe (27), and/or said at least one second duct (22) defines an oil flow cross section smaller than or equal to that of the pipe.

7. Turbine engine, such as a turboprop engine (1), having at least one unducted propeller (2, 3), **characterized in that** it comprises at least one device according to any one of the preceding claims.

8. Method for lubricating a rolling bearing (14) of a turbine engine, this bearing being mounted between an immobile internal part (13) and an external part (11), the bearing comprising an external race (16)secured to the external part and an internal race (15)secured to the internal part, the internal part comprising at least one first oil flow duct (24) for supplying oil to the internal race of the bearing, the internal race (15) comprising an upstream annular row of oil flow channels (19) and a downstream annular row of oil flow channels (19), the channels (19) being substantially radial, the radially external ends of the channels (19) opening into a rolling track of the internal race (15), the radially internal ends of the channels (19) opening into an internal annular cavity (20) of the internal race (15), said at least one first duct (24) extending in a transverse plane (P) which passes substantially between the channels (19), at mid-distance therefrom, **characterized in that** it consists in supplying oil to said at least one first duct at a sufficient pressure for this oil to be transported as far as the bearing.
